# EUROPEAN PATENT SPECIFICATION

(11) **EP 3 984 882 B1**
(45) Date of publication and mention of the grant of the patent: **20.03.2024**
(21) Application number: 21172864.7
(22) Date of filing: 07.05.2021
(51) Int. Cl.: B64C 11/18, B64C 27/46, B64C 23/06, F01D 5/14, F03D 1/06

(54) **PROPELLER AND PROPELLER BLADE**
PROPELLER UND PROPELLERBLATT
HÉLICE ET PALE D'HÉLICE

(30) Priority: 14.10.2020 HU 2000339
(43) Date of publication of application: 20.04.2022
(73) Proprietor: Círus, Róbert, 2500 Esztergom (HU); Nyíri, Attila, 2500 Esztergom (HU); Círus, Norbert, 2500 Esztergom (HU)
(72) Inventor: Círus, Róbert, 2500 Esztergom (HU); Nyíri, Attila, 2500 Esztergom (HU); Círus, Norbert, 2500 Esztergom (HU)
(74) Representative: Földi, Julianna Veronika

(56) References cited:
- EP-A2- 1 577 212
- WO-A2-2009/098442
- AU-B4- 2018 101 230
- US-A- 4 478 380
- US-A1- 2017 218 774

## Description

The present invention relates to a propeller for aircrafts, helicopters, wind turbines with horizontal axis, fans and drones, it also relates to a wide propeller blade.

The requirements of propellers and the propeller blades that are part of them are very complex. The ideal flow conditions should be approximated as closely as possible so that the power absorbed or transmitted is equal to the power of the connected motor or generator. This can always be solved only at the cost of a technical compromise.

If propellers, wind turbines with horizontal axis or fans can only be made with a limited diameter, the desired performance can be achieved by increasing the width of their blades. In this case, however, the flow conditions deteriorate and significant, undesirable vortices are generated at the wide tip of the blades. These obviously cause energy loss and efficiency degradation. An alternative or additional solution could be to increase the number of blades, but in the case of more than four blades arranged in one plane, the blades interfere with each other from a flow point of view.

In the case of aircraft wings, for reducing losses, the so-called wing flap or wingtip device, also known as a winglet can be used, which is a vertically positioned auxiliary wing flap or an upward extension of the wing located at the wing tips of some airplanes. The winglet reduces air vortices at the wing tip, which would otherwise significantly increase the air resistance of the wing of the aircraft. However, the winglet can only be used effectively in linear motion, therefore it is generally used on wings.

Propeller blades used at aircrafts, helicopters or drones, as well as wind turbine blades of horizontal axis of rotation or fan blades also generate air vortices at the distal ends of the axis of rotation, which increase energy losses. The losses are particularly high if the tip of the blades are not taperingly pointed but wide.

A vortex distribution plate placed at the end (tip) of wings or blades, similar to a winglet, is shown in document DE3816430. The plate is arranged perpendicular to the longitudinal direction of the blade and is provided with holes to reduce the vortices at the the blade tip. The holes widen towards the outer edge of the plate, thus ensuring that the pressure difference between the pressure and suction side does not suddenly begin to equalize in order to maintain the buoyancy.

The solution described in patent application EP 0782956 A1 for helicopter rotors attempts to reduce the vortices generated at the tip of the helicopter rotor by the complex geometry of the rotor end.

US 2,160,323 discloses a propeller having a passage in the blade to reduce vacuum emerging on the suction side of the blade as well as the deriving noise and to increase efficiency. The passage connecting the pressure side of the blade to the suction side is elongated, the length of which is 70-80% that of the blade and is arranged substantially along the longitudinal axis of the blade. This patent document, however, does not specifically teach how to reduce flow losses at the blade tip.

U.S. patent document 6,283,406 B1 discloses a noise reduction method for the noise generated by a helicopter rotor. At the blade tips, inlets close to the leading edge and outlets close to the trailing edge, as well as passages connecting them are arranged near the surface of both the suction and the pressure sides. Thus, the passages do not connect the suction and pressure sides, but run substantially parallel to the sides of the blade and form slots that are not permanently permeable to air, but are controlled to open and close above a certain level of noise, pressure and speed. According to another aspect of this solution, outlet openings are arranged at the blade tips in several places and directions, through which gas jets are led to accelerate the damping of the vortices at the blade tips.

US 5,791,875 also teaches a relatively complex control device for reducing blade tip vortices. Here, a vortex rotating in the opposite direction is created, and the medium for this purpose is guided to the wing tips in channels arranged in the wing, and in the rotor blade, where the medium is driven out with controlled pressure and in a controlled, curved path to form a counter-vortex.

Document WO 2009/098442 discloses a control device (16) for a wing (10) comprising an airbox assembly (16) connected to an aerofoil wing tip (17). The airbox assembly (16) includes passages (23) that receive air from the lower surface of the aerofoil (10) and accelerate and exhaust the air upwardly, outwardly and rearwardly of the aerofoil (10). This reduces or prevents the formation of wing tip vortices and so reduces induced drag. In addition, the airbox assembly (16) also includes a wing tip (17) of increased camber relative to the wing (10) that changes the flow of air over the lower pressure surface (11) of the wing (10) to mirror that over the higher pressure wing surface (12) so reducing on eliminating bound trailing edge vortices. Such devices can be used on other foils that operate in fluid streams to provide a force.

US 4,478,380 A relates to a wing tip vortices suppressor utilizing a scoop having an inlet at the lower, leading surface of the wing and an outlet at the upper, trailing surface to reduce turbulence causing pressure differential across the wing. A turbulence fence is used at the tip to account for the frictional losses of the air flowing through the scoop and other phenomena that prevent exact pressure equilization.

The solution described in AU 2018101230 B4 (with substantially the same subject-matter as EP3509945 A1) document can be considered as the closest piece of prior art, wherein the slots connecting the suction and the pressure sides are formed at the blade tips, specifically in order to eliminate the losses at the blade tips. The distance of the slot from the blade tip is given as a percentage of the length of the diameter, adapted to the size and location of the vortex cones formed at the blade tip, for extinguishing them by vortex interference. The slot is divided into sections with small interruptions.

The disadvantage of the prior art wings and propellers is that they do not provide a solution to also ensure the maximum strength of the blade or the blade tip when designing a device for eliminating, reducing or stopping the vortices at the blade tip (or wing tip). Each of the referenced inventions has been created by material reliefs, omissions such as longitudinal gaps, holes, passages formed inside the blade, sometimes by also placing complex control elements which mean additional loads; however, there is no mention of strength aspects. Furthermore, they do not teach how to eliminate losses specifically due to pressure irregularities.

It is an object of the present invention to reduce or eliminate flow losses at the blade tip by providing a propeller blade or propeller that provides uniform flow conditions along the entire width of the blade tip.

It is a further object that the structure of the propeller blade or the propeller designed to reduce or eliminate flow losses at the blade tip should provide minimal air resistance and be of adequate strength to withstand centrifugal force.

In addition, it is an important criterion of the invention to provide a simple, maintenance-free or low-maintenance solution.

According to a first aspect of the invention, the object is achieved by providing a propeller blade applicable for a propeller for aircrafts, helicopters, wind turbines with horizontal axis, fans and drones, the propeller rotating in a determined rotational direction about an axis of rotation; wherein the propeller blade, has a pressure side, a suction side opposite thereto, a blade root adapted to be connected to the propeller, a blade tip at the opposite end with respect to the blade root; wherein a slot is formed within the propeller blade connecting the pressure side with the suction side, which slot has an inlet opening formed on the pressure side and an outlet opening formed on the suction side. The slot is divided into at least two slot-sections along its length by at least one partition wall; wherein the propeller blade along its length has a leading edge and a trailing edge opposite thereto; a first distance between a slot brink of the slot located closest to the blade tip and the blade tip which distance is closest to the leading edge is 9%-18,5% of the width of the blade tip, while a second distance between the slot brink of the slot located closest to the blade tip and the blade tip which distance is closest to the trailing edge is 14%-23,5% of the width of the blade tip; and the slot contains a pressure equalizing element, which pressure equalizing element is a channel connecting the neighboring slot-sections, the channel being formed in the at least one partition wall.

According to a second aspect of the invention, our object is achieved by providing a propeller for aircrafts, helicopters, wind turbines with horizontal axis, fans and drones, which propeller is adapted to rotate in a certain direction of rotation about an axis of rotation; the propeller having at least one propeller blade, wherein the propeller blade is fixed to a propeller hub which is drivingly connected to the axis, and the at least one propeller blade is a propeller blade according to the first aspect of the invention.

The invention will now be described in more detail with reference to the accompanying drawing. In the drawing
Figure 1 is a perspective view of a propeller with two propeller blades not falling under the scope of the claims, but present for illustration purposes,
Figure 2 shows the tip of the propeller blades shown in Figure 1, with a continuous blade tip slot, marking the harmful vortex cone at the blade tip,
Figure 3 shows the tip of a propeller blade not falling under the scope of the claims, but present for illustration purposes, and seen from the suction side, with a blade tip slot divided into two slot-sections,
Figure 4 is a perspective view a prior art propeller with two propeller blades, seen from the pressure side;
Figure 5 shows the tip of the propeller blades shown in Figure 4, with the blade tip slot divided into two slot-sections,
Figure 6 is a bottom view of a prior art propeller with two propeller blades;
Figure 7 is a cross-sectional view of the tip of the propeller blade taken along line A-A of Figure 6 with the harmful vortices and the ones extinguishing them;
Figure 8 shows a preferred embodiment of the tip of a propeller blade according to the invention seen from the pressure side, with a slot divided into two slot-sections and a pressure equalizing channel formed therebetween, in the uncovered state,
Figure 9 shows a preferred embodiment of the tip of a propeller blade according to the invention seen from the pressure side, with a slot divided into two slot-sections in a state covered with a plate,
Figure 10a is a cross-sectional view of an arcuate embodiment of a blade tip slot according to the invention, wherein the inlet opening is covered with a plate over a portion of its width,
Figure 10b is a cross-sectional view of a straight sidewall embodiment of a blade tip slot according to the invention, wherein the inlet opening is covered with a plate over a portion of its width;
Figure 10c is a cross-sectional view of a straight sidewall embodiment of a blade tip slot according to the invention, wherein the inlet opening is covered over a portion of its width, with the portion of the slot close to the blade tip filled.

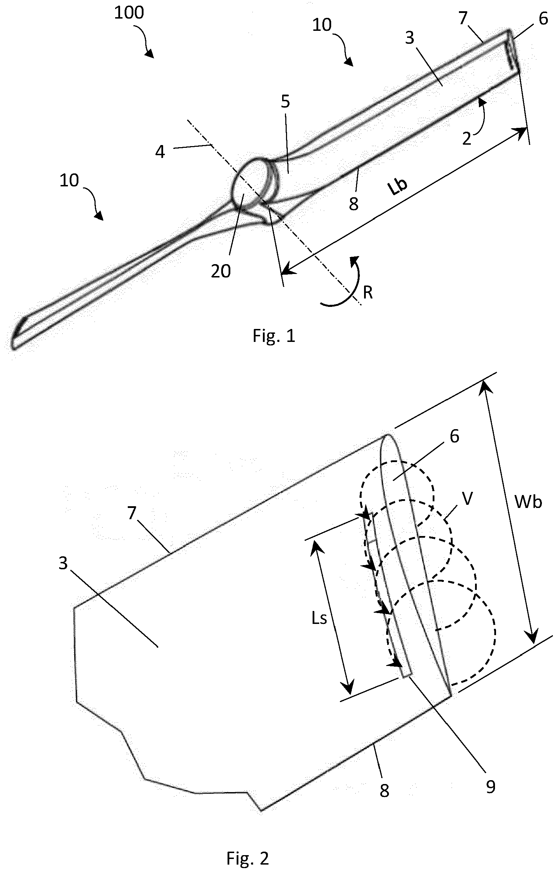

A first aspect of the present invention relates to propeller blades. The general characteristics of the propeller blades 10 for the flowing of gaseous media in the case of airplanes, helicopters, fans or drones and for the extraction of energy in the case of wind turbines with a horizontal axis of rotation are shown by means of Figures 1 and 2.

Figure 1 shows a perspective view of a propeller 100 with two propeller blades 10 seen from the suction side. The propeller blade 10 can be used for a propeller 100 rotating in a defined direction of rotation R about an axis of rotation 4, which propeller blade 10 has a pressure side 2, opposite thereto a suction side 3, it has a blade root 5 formed to be connectable to the propeller 100, it also has a blade tip 6 at its radially outer end, which is thus located along the orbit traveled by the propeller 100 during operation. The propeller 100 shown in the figure further comprises a propeller hub 20 in driving connection with the axis of rotation 4. The two opposed propeller blades 10 are connected to the hub 20 at their blade roots 5.

There are aircraft propellers in which the propeller blades 10 are generally made up in one piece so that its length is substantially equal to the diameter of the circle described by the propeller. However, since in the case of wind turbines or fans, it is more common to mount separate propeller blades 10 on the propeller hub and fan hub 20, the length of which is thus approximately the radius of said circle reduced by the radius of the hub. In this application the length of the blade Lb is understood as the distance between the blade root 5 and the blade tip 6.

The propeller blade 10 has a leading edge 7 extending along the blade length Lb and a trailing edge 8 located opposite the leading edge 7. When the propeller blade 10 is mounted on the propeller 100, during rotation, the first blade edge according to the direction of rotation indicated by the arrow R in Fig. 1 is the leading edge 7, while the subsequent blade edge is the trailing edge 8; the blade width between them is generally referred to as chord length.

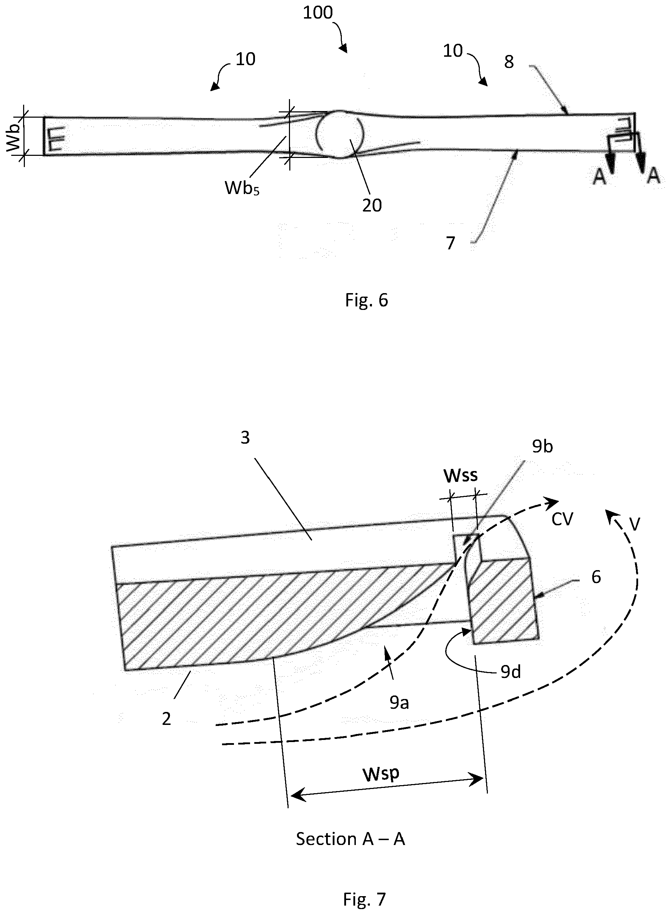

Among propeller blades we distinguish between the so-called "pointed" or "wide" blades. Propeller blades whose end or tip terminates at a point, namely at the intersection of the trailing edge 8 and the leading edge 7 of the propeller blade, are the pointed blades. In practice, naturally, these end points are rounded by some radius, for technical and strength reasons. If the end of the propeller blade is not clearly pointed, then the point of intersection of the longitudinal axis of the blade and the chord length at the blade end, i.e. the width Wb of the blade end (tip) is regarded as that point. The so-called "wide" blade tips do not end at a point, but the blade tips 6 have a measurable width Wb (chord length). The present invention preferably relates to such wide blade tips. The width of the blade tip Wb of the propeller blade 10 measured at the blade tip 6 is preferably at least one third of the width Wb₅ of the blade 10 measured at the blade root 5 (see Figure 6).

In the case of high power adaptation, the selection of the chord length of the propeller blade 10 causes a problem, and in the case of high power, wide blade tips 6 should be formed. This may be due to the fact that the diameter of the propeller 100 cannot be increased larger because it would hit the ground, so it is necessary to increase the width Wb of the blade tip 6. At this point, however, the losses from the flow around the blade tips 6 increase drastically. When wide blade tips 6 are used, the invention uses the phenomenon of vortex interference to reduce or eliminate the potential loss derivable from the flow of the blade tips 6. The present invention uses a passive approach, i.e. no intervention or complicated control during operation is needed, but an efficient slot formation is applied near the blade tip 6.

The mathematical modeling of the cone-shaped harmful V-vortices at the 6 blade tips illustrated in Figure 2 is a rather complex task, a serious computational arsenal, and a number of approximations and simplifications would have to be applied. [Goldstein, Sydney. (1929). On the Vortex Theory of Screw Propeller.] The loss, efficiency-reduction derivable from the V-vortices at the blade tip 6 is more easily computable. Accordingly, the geometry and location of the slot 9 were determined on the basis of empirical measurement data, with iterational steps.

The cross-sectional view of Fig. 7 shows how the air passing from the pressure side 2 to the suction side 3 at the blade tip 6 splits into two branches due to the slot 9, and the air branch passing through the slot 9 having a CV vortex of substantially the same magnitude but with a swirl in the opposite direction which reduces or extinguishes the harmful V-vortices generated at the blade tips 6. In Figures 2 and 7, the harmful vortices are designated by V, and the counter-vortices extinguishing or reducing them, generated by the present invention are designated by CV.

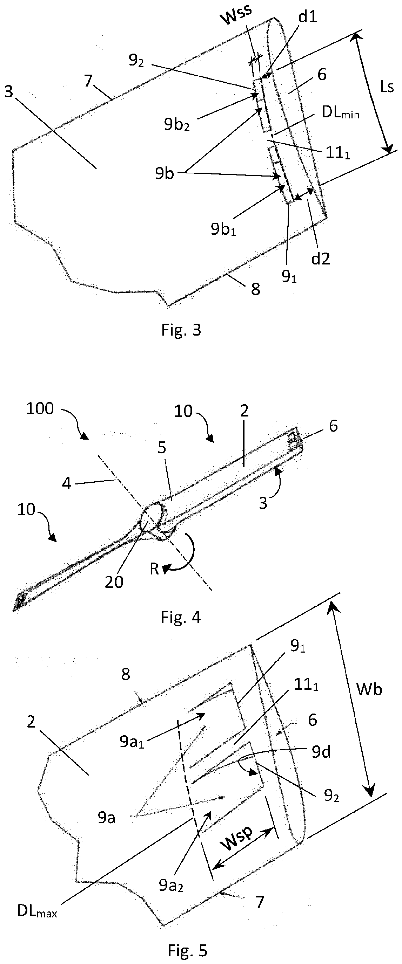

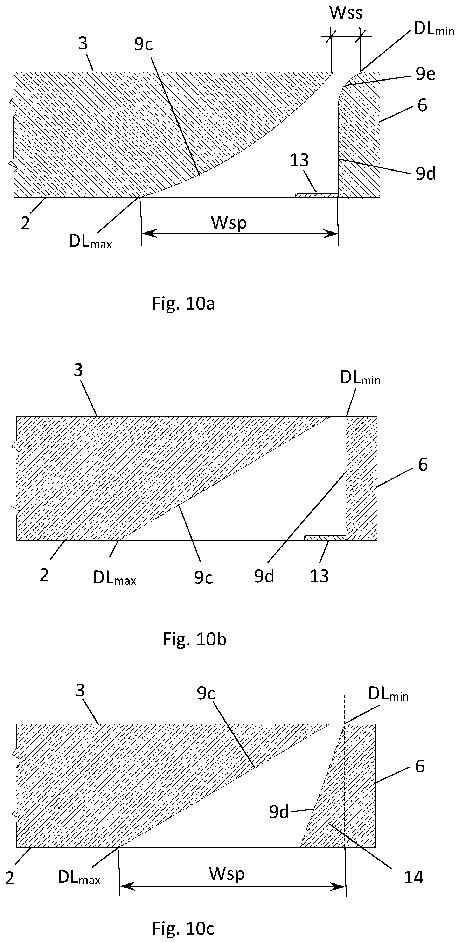

In order to achieve the best possible efficiency, it is important to determine the exact dimensions, geometry and arrangement of the slot 9. In Figs. 7 and 10a-10c, it can be clearly seen that the slot 9 functions as a nozzle. The slot 9 is formed in the propeller blade 10 in a manner connecting the pressure side 2 with the suction side 3. The slot 9 has a length Ls and an inlet opening 9a with a predetermined width Wsp formed on the pressure side 2 (Figs. 5 and 7), one side of which inlet opening is the brink DLₘₐₓ of the slot 9 farthest from the blade tip 6 (Figs. 5 and 10a-10c). The slot 9 also has an outlet opening 9b with a predetermined width Wss formed on the suction side 3 (Figs. 3 and 7). The slot 9 is formed in the vicinity of the blade tip 6, i.e. the distance between the slot brink DLₘₐₓ of the slot 9 farthest from the blade tip 6 and the blade tip 6 is at most one-eighth of the length Lb of the propeller blade 10, but its value preferably ranges from one tenth to one twentieth of the length Lb of the propeller blade 10.

The inlet opening 9a of the slot 9 has a larger surface area than the outlet opening 9b thereof. During operation, overpressure is generated on the lower half of the propeller blade 10, i.e. on its pressure side 2. A portion of the medium here enters the slot 9 through the inlet opening 9a and then exits through the outlet opening 9b. The slot brink DLₘᵢₙ of the slot 9 closest to the blade tip 6 is located in the outlet opening 9b, forming one side thereof (Figure 3).

The side 9c of the slot 9 farthest from the blade tip 6 is preferably curved from the pressure side 2 to the suction side 3, i.e. curved over its entire length, so that the slot 9 has an ever-narrowing design from the inlet opening 9a to the outlet opening 9b. This facilitates, on the one hand, the entry of the medium into the slot 9 and, on the other hand, further increases its pressure and speed. The side 9d of the slot 9 opposite the curved slot side 9c, closer to the blade tip 6, is substantially straight and perpendicular to the pressure side 2 almost on its entire length, starting from the inlet opening 9a, but near the outlet opening 9b a curved slot side 9e with a smaller radius than that of the curved slot side 9c is arranged on slot side 9d. The curved slot side 9e deflects the medium flowing out of the outlet opening 9b against the harmful vortex V at the blade tip 6. Figure 10a. shows that the intersection of the slot side 9e and the suction side 3 gives the slot brink DLₘᵢₙ which is located closest to the blade tip 6.

Instead of the curved slot design shown in Figs 7 and 10a, the cross-section of the slot 9 could also be formed from straight sides (Figure 10b), according to which the side 9c is not curved but straight and inclined, connecting the inlet opening 9a with the outlet opening 9b of smaller area. Furthermore, side 9d can also be straight in its entire section from the pressure side 2 to the suction side 3, so it does not have a curved slot side 9e near the outlet opening 9b. The design of the side 9d may be substantially perpendicular to or at an angle to the pressure side 2 (Fig. 10c). By the latter inclined arrangement of the slot side 9d, substantially the entire part of the space 14 of the slot 9 is filled, therefore also providing a kind of (solid) partial covering of the inlet opening 9a.

The slot 9 is arranged substantially parallel to the circumference of the emerging harmful vortex V so that the intersection of the superficies (or surface) of the vortex V and the surface of the propeller blade 10 provides the location of the slot 9 to be formed. The detrimental vortex V is substantially frustoconical along the width Wb of the blade tip 6 (Fig. 2), accordingly the slot 9 - i.e. its slot brink DLₘᵢₙ - is arranged slightly oblique to the blade tip 6 along the width Wb of the blade tip 6. Thus, the distance of the slot 9 from the blade tip 6 is expressed by the distances measured from the two points of the slot 9, namely from its beginning towards the leading edge 7 and from its end towards the trailing edge 8 (Fig. 3).

Figure 2 shows a slot design where the slot 9 is continuous. However, for reasons of strength, the slot 9 is divided into at least two slot-sections 9₁... 9ₙ along its length Ls by at least one partition wall 11₁... 1 1ₙ₋₁. Figs. 3-6 and 8-9, respectively show slots 9, which are divided into two slot-sections 9₁, 9₂ by a partition wall 11₁. In the case of very wide (long chord length) blades 10, the slot 9 must be divided into either n = 3 or even more parts so that the end piece of the blade tip 6 cannot be torn off by the centrifugal force or by the air forces prevailing at the flight altitude.

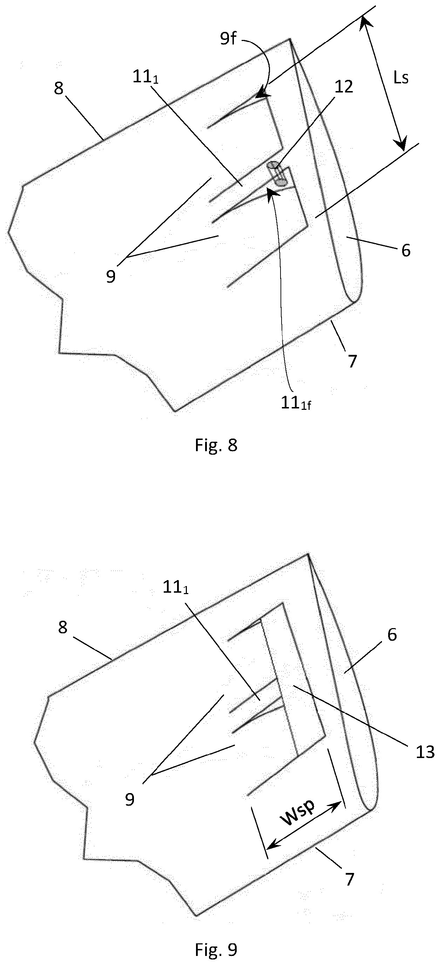

Figure 3 shows a first distance d1 measured between the slot brink DLₘᵢₙ of the slot 9 and the blade tip 6 at the side of the slot 9 closest to the leading edge 7 and seen from the suction side 3; as well as a second distance d2 measured between the slot brink DLₘᵢₙ of the slot 9 and the blade tip 6 at the side 9f of the slot 9 (see Fig. 8) closest to the trailing edge 8 and seen from the suction side 3. The distances d1 and d2 were determined by physical experiments, based on which the first distance d1 of the slot 9 from the blade tip 6 is 9% -18,5%, preferably 13,8% of the width Wb of the blade tip 6; and the second distance d2 of the slot 9 from the blade tip 6 is 14% to 23,5%, preferably 18,8% of the width Wb of the blade tip 6. The geometry, size and location of the slot 9 described here ensure the creation of a counter-rotation CV in the opposite direction for damping or extinguishing the harmful V vortex.

Experience has shown that the generated counter-vortices CV follow the changes in the slot distances d1, d2 more sensitively if they are a function of the width Wb of the blade tip 6, rather than if they were a function of the diameter of the propeller 100. Therefore, giving a change in the slot distance relative to the blade tip 6 gives a significantly more accurate result than what was disclosed in EP3509945 A1, where the corresponding distance values of the slot 9 from the blade tip 6 are given as a percentage of the length of the diameter of the propeller 100.

The length Ls of the slot 9 as well as the width Wsp therof formed on the pressure side 2 and the width Wss formed on the suction side 3 are characterized as follows (Figures 3 and 5).

The slot 9, divided into slot-sections 9₁... 9ₙ, has n pieces of outlet openings 9b₁... 9bₙ on the suction side 3. The outlet openings 9b₁... 9bₙ are each rectangular, and the rectangle enclosing them is considered (for the sake of simplicity) to be the outlet opening 9b. The longer side of the rectangle delimiting the outlet opening 9b gives the length Ls of the slot 9. The shorter side of the enclosing rectangle of the outlet openings 9b₁... 9bₙ, i.e. the width Wss formed on the suction side 3 of the slot 9, is a fraction thereof, approximately 2% -10%, preferably 3,53% of the length Ls of the slot 9.

The slot 9, divided into slot-sections 9₁... 9ₙ, has n pieces of inlet openings 9a₁... 9aₙ on the pressure side 2. The inlet openings 9a₁... 9aₙ are each rectangular, and the rectangle enclosing them is considered to be the inlet opening 9a. The length of the inlet opening 9a is equal to the length of the outlet opening 9b, which gives the length Ls of the slot 9. The shorter side of the enclosing rectangle of the inlet openings 9a₁... 9aₙ, i.e. the rectangle delimiting the inlet opening 9a, that is, the width Wsp formed on the pressure side 2 of the slot 9 is smaller, approximately 20% -80%, preferably 50% of the length Ls of the slot 9.

The length Ls of the slot 9, i.e. the longer extent of the side 9d, is approximately 50-90%, preferably 60%, of the width Wb of the blade tip 6, wherein according to one embodiment, the slot 9 is centrally arranged along the width Wb of the blade tip 6, i.e. is located at substantially the same distance from the leading edge 7 and the trailing edge 8. According to another embodiment, the distance of the slot 9 - i.e. the side 9f (Fig. 8) - from the trailing edge 8 is approximately 0,1-5% of the width Wb of the blade tip 6.

The extension of the curved slot side 9c parallel to the leading edge 7 and the trailing edge 8 ranges from 30% to 98% of the length Ls of the slot 9. The extent of the curved slot side 9e parallel to the leading edge 7 and the trailing edge 8 ranges from 0,1% to 2% of the length Ls of the slot 9.

The development realized by the present invention is based on the equalization of the pressure differences occurring at the blade tip 6 and in the vicinity of the slot 9, as well as on its flow-improving effect. Accordingly, the slot 9 comprises pressure equalizing elements 12, 13, 14.

According to a preferred embodiment, a further pressure equalizing element is an element 13, 14 which partially covers the inlet opening 9a of the slot 9. In order to increase the efficiency, those parts of the slot 9 which can casuse measurable air resistance during the operation of the propeller blade 10, and thus causing further turbulence and pressure unevenness within the slot 9, are at least partially covered as can be seen on Figs. 9 and 10a-10c. The parts forming base for air resistance and pressure unevenness are the side 9f of the slot 9 (indicated in Fig. 8) closest to the trailing edge 8, which is perpendicular to the rotational speed vector; also in the case of a divided slot 9, surfaces 11_{1f}... 11 _{(n-1)f} of the partition walls 11₁...11ₙ₋₁, which are perpendicular to the rotational speed vector seen from the inlet opening 9a (only one partition wall 11₁ is illustrated in Fig. 8, accordingly, only one such affected surface 11_{1f} is shown).

Hence, in order to achieve a reduction in air resistance and to equalize pressure, a part of the inlet opening 9a of the slot 9, which is closer to the blade tip 6 is covered by the elements 13, 14 covering a section of the width Wsp of the slot 9 along the entire length Ls thereof.

Preferably, the inlet opening 9a of the slot 9 is covered with a plate 13 on approximately 10% -50% of its width Wsp, towards the blade tip 6, along the entire length Ls of the slot 9. The plate 13 can be fixed by gluing, welding, releasable bonding, e.g. by screwing. The material of the plate 13 can be made of wood, metal, plastic or a composite material.

As an alternative solution shown in Fig. 10c, the inlet opening 9a of the slot 9 is preferably covered approximately 10% -50% of its width Wsp, filling the space 14 of the slot 9 towards the blade tip 6. The coverage is realized along the entire length Ls of the slot 9. The simplest way to fill the space 14 is to leave the own material of the propeller blade 10 as a filler.

Covering the slot 9 with the aforementioned elements 13, 14 also restores the original contour (profile) of the cross-section of the blade 10 over the covered part, which original profile was formed taking into account the aerodynamic aspects in a way that the blade tip-vortex reducing ability of the slot 9 remains maintained.

In the case of slots 9 which, for considerations of strength, are divided by partition walls 11₁...1 1ₙ₋₁ separating them along the length Ls, the cover has an additional function-improving effect. For, in the uncovered state, in each of the slot-sections 9₁... 9ₙ, as in separate chambers, the pressure differences develop deriving from turbulence. However, due to the coverage, the resulting pressure differences are reduced.

According to the claimed invention, a pressure equalizing element is designed as a pressure equalizing channel 12 arranged in the partition walls 10₁... 10ₙ₋₁, which alleviates the losses due to pressure dissonances prevalent at a divided slot 9. For, in the case of a divided slot 9, another cause for the pressure differences in each slot-section 9₁... 9ₙ is that the pressure in the lower half of the propeller blade 10, i.e. on the pressure side 2, does not have a constant value, it changes along the width of the blade. The lower airflow of the propeller blade 10, which has a higher air pressure during operation, is halved on the pressure side 2 of the propeller blade 10 as it passes through the slot 9. The pressure dissonances (irregularities) existing right before passing are compensated for as the air pass through the slot 9 due to the deflection effect caused by the slot 9.

In the case of a divided slot 9, however, the pressure irregularities would only be equalized within each slot-section 9₁...9ₙ (chambers). Due to the pressure differences, the pressure required to create the nozzle effect may therefore be diverse in the individual chambers. This would create counter-vortices CV with different spin values for each chamber 9₁... 9ₙ (slot-section), so a pressure equalizing channel 12 is formed on the partition walls 10₁... 10ₙ₋₁ connecting the adjacent slot sections 9₁... 9ₙ.

As a result, all sections 9₁... 9ₙ of the slot 9 can generate the same nozzle effect with the same pressure and the same impulse torque (spin), which is able to extinguish the harmful blade tip-vortex V, since that is not physically divided into sections.

The pressure-equalizing effect of the channels 12 formed in the partition walls 10₁... 10ₙ₋₁ can be detected in the case of uncovered slots 9.

It can be used together with the plate (13).

To create the slot 9, each of the slot-sections 9₁...9ₙ is preferably etched out of an originally contiguous propeller blade 10 in order to ensure the continuity of the material of the propeller blade 10, thereby increasing the strenght of the propeller blade 10 and the blade tip 6.

According to another aspect of the invention, there is provided a propeller 100 for use in aircrafts, helicopters, fans and drones as well as wind turbines with horizontal axis, the propeller 100 being adapted to rotate in a defined direction of rotation R about an axis of rotation 4; the propeller 100 having at least one propeller blade, wherein the propeller blade is attached to a propeller hub 20 drivingly connected to the axis of rotation 4, and the at least one propeller blade 10 is a propeller blade according to the first aspect of the invention.

Preferably, the propeller 100 comprises at least two propeller blades 10 according to the first aspect of the invention, attached to the propeller hub 20, wherein the at least two propeller blades 10 are integrally formed in one piece. This is especially relevant for propeller blades designed with 3D printing technology.

The propeller 100 preferably comprises at least two propeller blades 10 according to the first aspect of the invention, attached to the propeller hub 20, wherein the at least two propeller blades 10 and the propeller hub 20 are integrally formed in one piece. This feature is especially relevant for the production of propellers designed with 3D printing technology.

The solution according to the invention can be applied for propeller blades 10 of any size and for propellers 100 provided therewith. The propeller blade 10 can be made of wood, metal or plastic, or a composite material. When the blade tip slot 9 is formed in one or more at least partly covered sections and / or with pressure equalizing channels according to the present invention, the vibrations generated at the tip of the propeller blade 10 are reduced, and the service life of the blades is considerably increased.

## Claims

1. Propeller blade (10), having a pressure side (2), a suction side (3) opposite the pressure side (3), a blade root (5) adapted to be connected to a propeller (100), a blade tip (6) at the opposite end with respect to the blade root (5), wherein a slot (9) is formed within the propeller blade (10) connecting the pressure side (2) with the suction side (3), which slot (9) has an inlet opening (9a) formed on the pressure side (2) and an outlet opening (9b) formed on the suction side (9b); wherein the slot (9) is divided into at least two slot-sections (9₁...9ₙ) along its length (Ls) by at least one partition wall (11₁...11ₙ₋₁); wherein the propeller blade (10) along its length (Lb) has a leading edge (7) and a trailing edge (8) opposite thereto; a first distance (d1) between a slot brink (DLₘᵢₙ) of the slot (9) located closest to the blade tip (6) and the blade tip (6) which distance (d1) is closest to the leading edge (7) is 9%-18,5% of the width of the blade tip (Wb), while a second distance (d2) between the slot brink (DLₘᵢₙ) of the slot (9) located closest to the blade tip (6) and the blade tip (6) which distance (d2) is closest to the trailing edge (8) is 14%-23,5% of the width of the blade tip (Wb); **characterized in that** the slot (9) contains a pressure equalizing element (12, 13); wherein the pressure equalizing element (12, 13) is a channel (12) connecting the neighboring slot-sections (9₁...9ₙ), the channel (12) being formed in the at least one partition wall (11₁...11ₙ₋₁).

2. Propeller blade (10) according to claim 1, **characterized in that** it contains a further pressure equalizing element (12, 13), which is an element (13) partly covering the inlet opening (9a) of the slot (9).

3. Propeller (100) adapted to rotate around a rotational axis (4) in a determined rotational direction (R), the propeller (100) has at least one propeller blade, wherein the propeller blade is fixed to a propeller hub (20) which is drivingly connected to the axis (4), **characterized in that** the at least one propeller blade is a propeller blade (10) according to any one of the preceding claims.

4. Propeller (100) according to claim 3, **characterized in that** it contains at least two propeller blades (10) according to any one of claims 1-2 fixed to the propeller hub (20), wherein the at least two propeller blades (10) are formed integrally with one another from one piece.

5. Propeller (100) according to claim 3, **characterized in that** it contains at least two propeller blades (10) according to any one of claims 1-2 fixed to the propeller hub (20), wherein the at least two propeller blades (10) and the propeller hub (20) are formed integrally with one another from one piece.

## Patentansprüche

1. Propellerblatt (10), das eine Druckseite (2), eine der Druckseite (2) gegenüberliegende Saugseite (3), einen mit dem Propeller (100) verbindbaren Blattfuß (5), am entgegengesetzten Ende des Blattfußes (5) eine Blattspitze (6) aufweist, wobei im Propellerblatt (10) ein die Druckseite (2) mit der Saugseite (3) verbindender Spalt (9) ausgebildet ist, welcher eine an der Druckseite (3) ausgebildete Einlassöffnung (9a) und eine an der Saugseite (3) ausgebildete Auslassöffnung (9b) aufweist; wobei der Spalt (9) entlang seiner Länge (Ls) durch mindestens eine Trennwand (11₁...11ₙ₋₁) in mindestens zwei Spaltabschnitte unterteilt ist; wobei das Propellerblatt (10) entlang seiner Länge (Lb) eine Vorderkante (7) und eine dieser gegenüberliegende Hinterkante (8) besitzt; ein erster Abstand (d1) zwischen dem der Blattspitze (6) am nahesten liegenden Spaltrand (DLₘᵢₙ) des Spaltes (9) und der Blattspitze (6), welcher Abstand (d1) der Vorderkante (7) am nahesten liegt, 9%-18% der Breite (Wb) der Blattspitze (6) beträgt, während ein zweiter Abstand (d2) zwischen dem der Blattspitze (6) am nahesten liegenden Spaltrand (DLₘᵢₙ) des Spaltes (9) und der Blattspitze (6), welcher Abstand (d2) der Hinterkante (8) am nahesten liegt, 14%-23,5% der Breite (Wb) der Blattspitze (6) beträgt; **dadurch gekennzeichnet, dass** der Spalt (9) ein Druckausgleichselement (12, 13) enthält, wobei das Druckausgleichselement (12, 13) ein die benachbarten Spaltabschnitte (9₁...9ₙ) verbindender, in mindestens einer Trennwand (11₁...11ₙ₋₁) ausgebildeter Kanal (12) ist.

2. Propellerblatt (10) nach Anspruch 1, **dadurch gekennzeichnet, dass** es ein weiteres Druckausgleichselement (12, 13) enthält, welches ein die Einlassöffnung (9a) des Spaltes (9) teilweise abdeckendes Element (13) ist.

3. Propeller (100), der um eine Drehachse (4) in einer bestimmten Drehrichtung (R) drehbar ist, der Propeller (100) mindestens ein Propellerblatt enthält, wobei das Propellerblatt an einer mit der Drehachse (4) in Antriebsverbindung stehenden Propellernabe (20) fixiert ist, **dadurch gekennzeichnet, dass** mindestens ein Propellerblatt ein Propellerblatt (10) nach einem der vorhergehenden Ansprüche ist.

4. Propeller (100) nach Anspruch 3, **dadurch gekennzeichnet, dass** er mindestens zwei an der Propellernabe (20) fixierte Propellerblätter (10) nach einem der Ansprüche 1-2 enthält, wobei die mindestens zwei Propellerblätter (10) miteinander integriert aus einem Stück geformt sind.

5. Propeller (100) nach Anspruch 3, **dadurch gekennzeichnet, dass** er mindestens zwei an der Propellernabe (20) fixierte Propellerblätter (10) nach einem der Ansprüche 1-2 enthält, wobei die mindestens zwei Propellerblätter (10) und die Propellernabe (20) miteinander integriert aus einem Stück geformt sind.

## Revendications

1. Pale d'hélice (10), ayant un intrados (2), un extrados (3) opposé à l'intrados (2), un pied de pale (5) conçu pour être relié à une hélice (100), un bout de pale (6) à l'extrémité opposée au pied de pale (5), où une fente (9) est formée dans la pale d'hélice (10) reliant l'intrados (2) et l'extrados (3), la fente (9) ayant une ouverture d'entrée (9a) formée sur l'intrados (2) et une ouverture de sortie (9b) formée sur l'extrados (3); la fente (9) est divisée sur sa longueur (Ls) en au moins deux sections de fente (9₁...9ₙ) par au moins une paroi de séparation (11₁...11ₙ₋₁) ; la pale d'hélice (10) le long de sa longueur (Lb) a un bord d'attaque (7) et un bord de fuite (8) opposé au bord d'attaque (7); une première distance (d1) entre un bord de fente (DLₘᵢₙ) de la fente (9) situé le plus proche du bout de pale (6) et le bout de pale (6) dont la distance (d1) est la plus proche du bord d'attaque (7) est de 9 % à 18,5% de la largeur du bout de pale (Wb), tandis que une deuxième distance (d2) entre un bord de fente (DLₘᵢₙ) de la fente (9) situé le plus proche du bout de pale (6) et le bout de pale (6) dont la distance (d1) est la plus proche du bord de fuite (8) est de 14 % à 23,5% de la largeur du bout de pale (Wb), **caractérisé en ce que** la fente (9) contient contient un élément d'équilibrage de pression (12, 13); où l' élément d'équilibrage de pression (12, 13) est un canal (12) reliant les sections de fente (9₁...9ₙ) adjacentes formé dans au moins une paroi de séparation (11₁...11ₙ₋₁).

2. Pale d'hélice (10) selon la revendicaton 1, **caractérisé en ce qu'**elle contient un autre élément d'équilibrage de pression (12, 13) qui est un élément (13) couvrant partiellement l'ouverture d'entrée (9a) de la fente (9).

3. Hélice (100) conçue pour tourner autour d'un axe de rotation (4) dans un sens de rotation déterminé (R), l'hélice comporte au moins une pale d'hélice, la pale d'hélice étant fixée à un moyeu d'hélice (20) qui est relié par entraînement à l'axe (4), **caractérisé en ce que** le au moins une pale d'hélice est une pale d'hélice (10) selon l'une quelconque des revendications précédentes.

4. Hélice (100) selon la revendication 3, **caractérisé en ce qu'**elle contient au moins deux pales d'hélice (10) selon l'une quelconque des revendications 1 - 2, fixées au moyeu d'hélice (20), où les au moins deux pales d'hélice (10) sont intégrées les unes aux autres et formées d'une seule pièce.

5. Hélice (100) selon la revendication 3, **caractérisé en ce qu'**elle contient au moins deux pales d'hélice (10) selon l'une quelconque des revendications 1- 2, fixées au moyeu d'hélice (20), où les au moins deux pales d'hélice (10) et le moyeu d'hélice (20) sont intégrés les uns aux autres et formés d'une seule pièce.
